(19)

Europäisches Patentamt
European Patent Office
Office européen des brevets

(11)  **EP 2 211 293 A2**

(12)  **EUROPEAN PATENT APPLICATION**

(43) Date of publication:
**28.07.2010  Bulletin 2010/30**

(51) Int Cl.:
*G06K 9/00* (2006.01)          *G06F 17/30* (2006.01)

(21) Application number: **10151184.8**

(22) Date of filing: **20.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority:  **26.01.2009  GB 0901263**

(71) Applicants:
• **Mitsubishi Electric R&D Centre Europe B.V.
20 Frederick Sanger Road
The Surrey Research Park
Guildford, Surrey GU2 7YD (GB)**
Designated Contracting States:
**GB**
• **Mitsubishi Electric Corporation
Chiyoda-ku
Tokyo 100-8310 (JP)**
Designated Contracting States:
**AT BE BG CH DE LI CY CZ DK EE ES FI FR GR HR HU IE IS IT LT LU LV MC MK MT NL NO PL PT RO SE SI SK SM TR**

(72) Inventors:
• **Paschalakis, Stavros
Surrey, GU1 2PD (GB)**
• **Giani, Alfredo
London, N1 8DN (GB)**

(74) Representative: **HOFFMANN EITLE
Patent- und Rechtsanwälte
Arabellastrasse 4
81925 München (DE)**

(54)  **Detection of similar video segments**

(57)  A method and apparatus for processing a first sequence of images and a second sequence of images to compare the first and second sequences is disclosed. Each image of the first sequence and each image of the second sequence is processed by: (i) processing the image data for each of a plurality of pixel neighbourhoods in the image to generate at least one respective descriptor element for each of the pixel neighbourhoods; and (ii) forming an overall image descriptor from the descriptor elements. Each image in the first sequence is compared with each image in the second sequence by calculating a distance between the respective overall image descriptors of the images being compared. The distances are arranged in a matrix, and the matrix is processed to identify similar images.

Figure 1

EP 2 211 293 A2

**Description**

**Field of the Invention**

The invention relates to a method, apparatus and computer program product for the detection of similar video segments.

**Background to the Invention**

In recent years there has been a sharp increase in the amount of digital video data that consumers have access to and keep in their video libraries. These videos may take the form of commercial DVDs and VCDs, personal camcorder recordings, off-air recordings onto HDD and DVR systems, video downloads on a personal computer or mobile phone or PDA or portable player, and so on. This growth of digital video libraries is expected to continue and accelerate with the increasing availability of new high capacity technologies such as Blu-Ray. However, this abundance of video material is also a problem for users, who find it increasingly difficult to manage their video collections. To address this, new automatic video management technologies are being developed that allow users efficient access to their video content and functionalities such as video categorisation, summarisation, searching and so on.

One problem that arises is the need to identify similar video segments. The potential applications include the identification of recurrent video-segments (e.g. TV-station jingles), and video database retrieval, based for instance on the identification of a short fragment provided by the user within a large database of video. Another potential application is the identification of repeated video segments before and after commercials.

In GB 2 444 094 A □Identifying repeating video sections by comparing video fingerprints from detected candidate video sequences□ a method is devised to identify repeated sequences as a mean of identifying commercial breaks. Initially, the detection of hard cuts, fades, and audio level changes identifies candidate segments. Whenever a certain number of hard cuts/fades is identified, a candidate segment is considered and stored. This will be compared against the subsequent identified candidate segments. Comparison is performed using features from a set of possible embodiments: audio level, colour histogram, colour coherence vector, edge change ratio, and motion vector length.

The problem with this method is that it relies on clear boundaries between a segment and its neighbours in order for the segment to be identified in the first place, and then compared against other segments. Also, partial repetitions (i.e. only one section of a segment is repeated) cannot be detected. Furthermore colour coherence vectors provide very little spatial information and therefore are unsuitable for frame-to-frame matching. Finally, some of the features suggested are not available in uncompressed video and therefore must be calculated ad-hoc, noticeably increasing the computational and time requirements.

In WO 2007/053112 Al □Repeat clip identification in video data□ a method and system for identifying repeated clips in video data is presented. The method comprises partitioning the video data into ordered video units utilising content-based keyframe sampling, wherein each video unit comprises a sequence interval between two consecutive keyframes; creating a fingerprint for each video unit; grouping at least two consecutive video units into one time-indexed video segment; and identifying the repeated clip instance based on correlation of the video segments.

The video is firstly scanned and for each frame a colour histogram is calculated. When a change in histogram is detected between two frames, according to a given threshold, the second frame is marked as keyframe. The set of frames between one keyframe and the next constitutes a video unit. A unit-level colour signature is then extracted, as well as frame-level colour signatures. Furthermore, unit time length is also considered as feature. A minimum of two consecutive video units are then united to form a segment. This is compared against each other segment in the video. L1 distances are calculated for the unit-level signature and time lengths and if both are below fixed thresholds, a match is detected and the corresponding point in a correlation matrix is set to 1 (0 otherwise). Sequences of 1s then indicate sequences of matching segments. The frame-level features are used only as a post-processing verification step, and not in the proper detection process.

One drawback with the technique in WO 2007/053112 Al is that it is based on video units, a video unit being the video between non-uniformly sampled content-based keyframes. Thus, a unit is a significant structural element, e.g. a shot or more. This is a significant problem since, in the presence of very static or very dynamic video content, the key-frame extraction process itself will become unstable and detect too few or too many units. Also, for video segments which are matching but also differ in small ways, e.g. by the addition of a text overlay, or a small picture-in-picture, and so on, the key-frame extraction may also become unstable and detect very different units. A segment is then defined as the grouping of two or more units, and the similarity metric is applied at the segment level, i.e. similarities are detected at the level of unit-pairs. So, the invention is quite limited in that it is targeted to the matching of longer segments, e.g. groups of shots, and cannot be applied to ad-hoc segments that last only a few frames. The authors acknowledge this and claim that this problem can be addressed by assuming for example, sampling at more than one keyframes per second. This, however, can only be achieved by uniform rather than content-based sampling. A major problem that emerges in that case is that video unit-level features will lose all robustness to frame rate changes. In all cases, a fundamental flaw of this method is that it makes decisions on the similarity of segments (i.e. unit-pairs) based on a fixed threshold, but without taking into consideration what similarity levels the neighbouring segments exhibit. The binarized correlation matrix may provide an excessively coarse description of the matching, and result in an excessive number of 1s, e.g. due to the presence of noise. Then, linear sequences of matching segments are searched for. With non-uniform key-frame sampling these lines of matching unit-pairs may be non-contiguous and made of breaking and non-collinear segments, and a complex line-tracking algorithm is employed to deal with all these cases. And although frame-level features are available, these are only used for verification of already detected matching segments, not for the actual detection of matching segments.

In general, the aforementioned prior art is mostly concerned with the identification of equal length segments with very high similarity, and distinctive boundaries with respects to neighbouring segments. This situation can reasonably suit the application of such methods to the identification of repeated commercials, which are usually characterized by sharp boundaries (e.g. few dark frames before/after commercial), distinctive audio levels, and equal length of the repetitions. However, the aforementioned prior art lacks the generality necessary to deal with more arbitrary applications.

One problem that is not addressed is the partial repetition of even a short segment, i.e. only a portion of a segment is repeated. In this case, it is not possible to use segment length as a feature/fingerprint for identification.

Another problem that is not addressed is the presence of text overlay in one of the two segments, or linear/non-linear distortion of one of the two segments (e.g. blurring, or luminance/contrast/saturation changes). Such distortion must be taken into account when considering more general applications.

In WO2004/040479 AI □method for mining content of video□ a method for detecting similar segments in video signal is illustrated. A video of unknown and arbitrary content and length is subject to feature extraction. Features can be audio and video based, e.g. motion activity, colour, audio, texture, such as MPEG-7 descriptors. A feature progression in time constitutes a time series. A self-distance matrix is constructed from this time series using Euclidean distance between each point of the time series (or each vector of a multi-dimensional time series). In the claims, other measures are mentioned, specifically dot product (angle distance) and histogram intersection. Whether multiple features are considered (e.g. audio, colour, etc), for each feature the method of finding paths in the distance matrix is applied independently. The resulting identified segments are subsequently fused.

The method finds diagonal or quasi-diagonal line paths in the diagonal matrix using dynamic programming techniques i.e. finding paths of minimal cost, defined by an appropriate cost function. This cost function includes a fixed threshold that defines, in the distance matrix, where the match between two frames is to be considered □good□ (low distance) or □bad□ (high distance). Therefore points whose value is above the threshold are not considered, while all the points in the distance matrix whose value is below the threshold are considered. Subsequently, paths which are consecutive (close endpoints) are joined, and paths that partially or totally overlap are merged. After joining and merging, short paths (less than a certain distance between the end points) are removed.

One drawback with the technique in WO2004/040479 AI is that the application of dynamic programming to search linear pattern in the distance matrix may be computationally very intensive. Furthermore one should consider that dynamic programming is applied to all points in the distance matrix that fall below a certain fixed threshold. This fixed threshold may lead to a very large or very small number of candidate points. A large number of points is produced if segments in a video are strongly self-similar, i.e. the frames in the segment are very similar. In this case a fixed threshold that is too high may generate a impractically large number of points to be tracked.

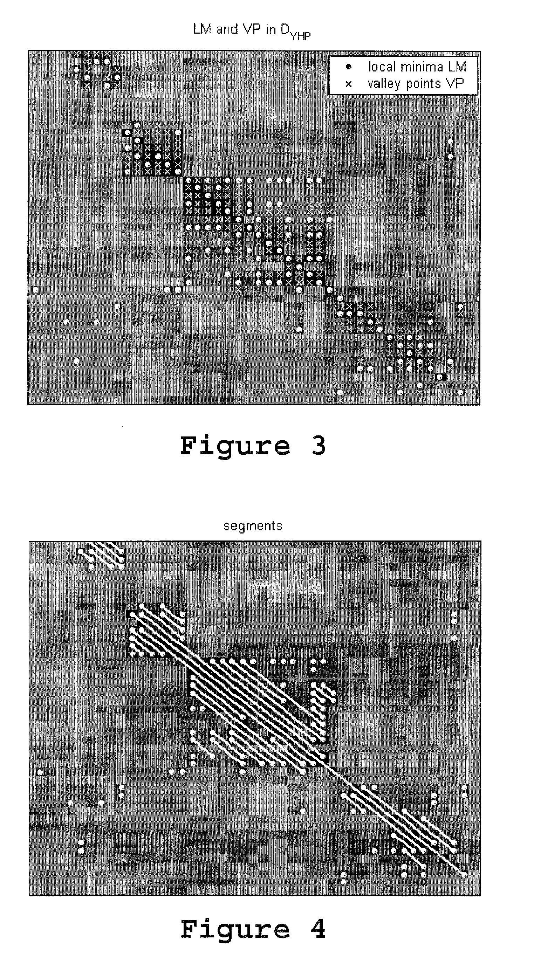

In the eventuality that a repeated segment is composed of identical frames, the problem of finding a least cost path could be ill-posed since all diagonal paths connecting a point of the first segment with a point of the second segment would yield same cost. This would generate a very large number of parallel patterns. An example of these patterns is illustrated in Figure 4. The invention does not provide a method to merge groups of parallel segments generated by a region of strong self-similarity.

On the other hand, in the presence of strong non linear editing (e.g. text overlay, blur, brightening/darkening) the distance between frames may rise above the fixed threshold, resulting in an insufficient number of candidate points.

Another problem may arise when a replicated segment is partially edited, e.g. some frames of the segment are replicated with blur, or text overlay. In this case a break is generated in the path of minimal cost, resulting in two split segments even if the two segments a semantically connected.

Another problem with both WO 2007/053112 AI and WO2004/040479 AI is the complexity and cost of calculating the distance matrix and storing the underlying descriptors, which become prohibitive for very large sequences when a real-time or faster operation is required. What is required is a method which alleviates these problems so as to allow fast processing of large sequences, e.g. entire programmes.

## Summary of the Invention

Certain aspects of the present invention are set out in the accompanying claims. Other aspects are described in the embodiments below and will be appreciated by the skilled person from a reading of this description.

An embodiment of the present invention provides a new method and apparatus for detecting similar video segments, which:

- Describes frames by inexpensive binary descriptors which may be compared by the Hamming distance, giving rise to a Hamming distance matrix, with great computational savings.

- Finds line patterns in the distance matrix on a small subset of points in the distance matrix. These are points who are local minima for the distance matrix, or neighbouring points of the local minima, where a minimum is defined by a finite-difference approximation of the first and second derivatives of the distance matrix.

  ○ These points are further processed and only those whose values is below a certain threshold are kept. This threshold is determined adaptively according to the number of minima found per column of the distance matrix, i.e. it guarantees that no less than a minimum number and no more than a maximum number of minima (if found) are kept.

  ○ Furthermore, whenever a sequence of identical or quasi-identical local minima is found, i.e. a local valley betraying a zone of strong self-similarity, a method is provided that finds and retains only selected points in the valley, reducing the number of parallel patterns generated.

  ○ By doing so, the method has a great advantage with respects to WO2004/040479 AI as it minimizes the computational effort by minimizing the number of potentially valid matches in the Hamming distance matrix.

- Provides a method to eliminate multiple parallel patterns generated by segments with high self-similarity (valleys in the distance matrix).

- Is robust to luminance shifts, text overlay and non-linear editing (e.g. blurring) and detecting weak similarities via adaptive threshold on local minima.

- Is robust to partial non-linear editing of a segment by providing a method to join split segments via an hysteresis threshold joining method.

- Can operate on compressed MPEG video stream as well as uncompressed video. Can operate only on I-frames of a compressed MPEG stream, therefore not requiring the decoding of P and B frames in the video stream. Consequently the method can also operate on time-subsampled version of the video.

- Can operate on DC or sub-DC frame resolutions, therefore minimizing the computational effort and the memory requirements and not requiring the decoding of the frame to its full-resolution.

- Operates on a compact vector of features for each individual frame, based on a multi-level spatial transformation.

- Exploits details and high-frequency spatial contents in the frame as a measure of similarity.

- Is based on a frame-to-frame matching, and does not require the grouping of frames prior the analysis.

- Does not rely on the audio track, transition/hard cut/scene change detections, dynamic content analysis.

- Does not require the segments to have equal or similar length.

- Is robust to frame rate changes.

- Has a high recall rate with negligible false detections.

More particularly, given two video sequences, an embodiment of the invention performs processing for each frame of each sequence to:

- Calculate a compact, computationally efficient descriptor based on a multi-level transform that captures multi-level luminance and chrominance content (average values/low pass) and interrelations (differences/high pass).

- Binarize the elements of the descriptor.

- Calculate a matching score between frames of one sequence with all the frames in the other sequence according to the corresponding descriptors□ binary distance, and store the result in a Hamming distance matrix.

- Find local minima along rows and/or columns in the distance matrix preserving continuity information to deal with uncertain/imperfect/multiple matching and coarse sampling.

- Detect sequences of consecutive and neighbouring minima over diagonal paths, tacking misalignments and missing matches, and assess them according to their overall matching scores.

**List of Figures**

Embodiments of the invention will now be described, by way of example only, with reference to the accompanying drawings, in which:

Figures 1 and 2 comprise flowcharts showing the processing operations in an embodiment;

Figure 3 illustrates the detection of local minima and valley points;

Figure 4 illustrates the detection of local minima lying on straight lines;

Figure 5 shows a flowchart of the processing operations to apply a hysteretic line segment joining algorithm;

Figure 6 shows an example of the results of the processing;

Figure 7 shows an embodiment of a processing apparatus for performing the processing operations.

**Embodiments of the Invention**

A method that is performed by a processing apparatus in an embodiment of the invention will now be described. The method comprises a number of processing operations. As explained at the end of the description, these processing operations can be performed by a processing apparatus using hardware, firmware, a processing unit operating in accordance with computer program instructions, or a combination thereof.

Given two video sequences, $S_a$ and $S_b$, the processing performed in an embodiment finds similar segments between the two sequences.

According to the present embodiment, video frames

$$\mathbf{F}(n,m) = \left\{ F^c(n,m) \right\}, \quad n = 1 \ldots N, \, m = 1 \ldots M, c = 1 \ldots C$$

may be described by their pixel values in any suitable colour space (e.g. $C = 3$ in RGB or YUV colour space, or $C = 1$ for greyscale images), or in any suitable descriptor derived thereof.

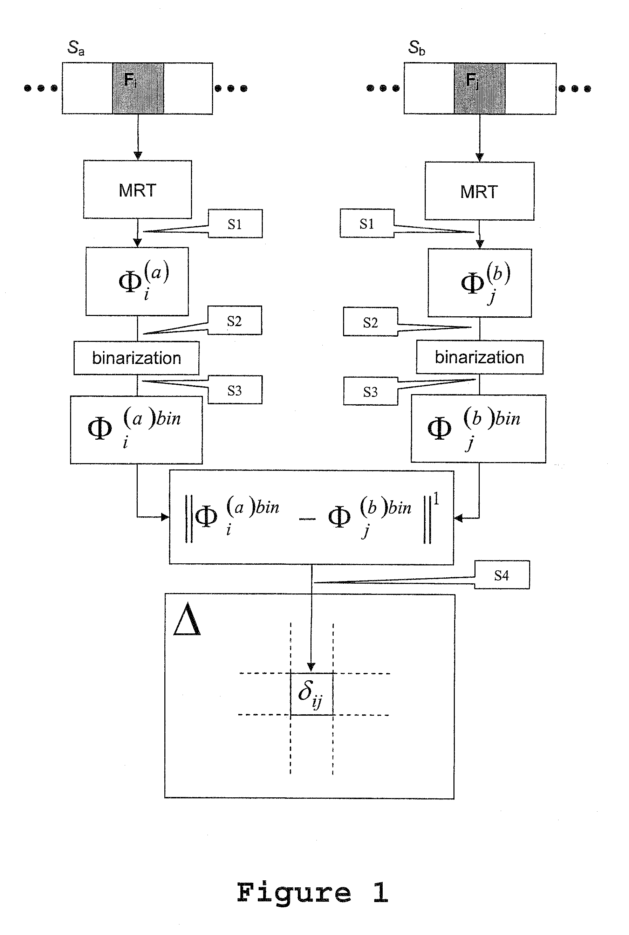

In one embodiment of the invention, each frame in $S_a$ and $S_b$ is described by its pixel values. In a preferred embodiment of the invention (Figure 1), each frame in $S_a$ and $S_b$ is described by a descriptor which captures the high-pass and low-pass content of the frame in the YUV colour channel (step S1).

Such descriptors may be calculated using the techniques described in EP 1,640,913 and EP 1,640,914, the full contents of which are incorporated herein by cross-reference. For example, such descriptors may be calculated using a multi-resolution transform (MRT), such as the Haar or Daubechies wavelet transforms. In a preferred embodiment, a custom, faster transform is used that is calculated locally on a 2x2 pixel window and is defined as

$$\begin{cases} LP^c(n,m) = \left[ F^c(n,m) + F^c(n+1,m) + F^c(n,m+1) + F^c(n+1,m+1) \right]/4 \\ HP_1^c(n,m) = \left[ F^c(n,m) - F^c(n+1,m) \right]/2 \\ HP_2^c(n,m) = \left[ F^c(n+1,m) - F^c(n+1,m+1) \right]/2 \\ HP_3^c(n,m) = \left[ F^c(n,m) - F^c(n,m+1) \right]/2 \end{cases}$$

In a similar fashion to the Haar transform, this MRT is applied to every 2x2 non-overlapping window in a resampled frame of dimensions N - M = a power of 2. For a $NxM$ frame $\mathbf{F}(n,m)$ it produces, for each colour channel $c$, $(NxM)/4$ $LP^c$ elements and $(3xNxM)/4$ $HP^c$ elements. Then, it may be applied to the $LP^c$ elements that were previously calculated, and so on until eventually only 1 $LP^c$ and ($NxM$-1) $HP^c$ elements remain per colour channel.

For each frame $\mathbf{F}(n,m)$ $LP$ and $HP$ elements, or a suitable subset of them are arranged in a vector (hereinafter referred as *descriptor*) $\Phi=[\phi_d]$ $d$=1...$D$ (step S2), where each element $\phi_d$ belongs to a suitable subset of $LP$ and $HP$ components (e.g. $D = C \times N \times M$).

Each element of the vector $\phi_d$ is then binarized (quantized) according to the value of its most significant bit (MSB) (step S3)

$$\Phi^{bin} = \left[ \phi_d^{bin} \right] \quad d = 1 \ldots D : \phi_d^{bin} = MSB(\phi_d), \quad \phi_d \in \Phi$$

In different embodiments of the invention, different frame descriptors, or different elements of each descriptor, are subject to individual binarization (quantisation) parameters, such as MSB selection, locality-sensitive hashing (for example as described in Samet H., □Foundations of Multidimensional and Metric Data Structures□, Morgan Kaufmann, 2006), etc.

Each frame

$$\mathbf{F}_i^{(a)} \text{ in } \quad S_a = \left[ \mathbf{F}_i^{(a)} \right], i = 1 \ldots A$$

is compared against each frame $\mathbf{F}_j^{(b)}$ in $S_b$ where $S_b = \left[ \mathbf{F}_j^{(b)} \right], j = 1 \ldots B$ by means of Hamming distance $\delta_{ij}$ of their respective binarized descriptors.

The elements $\delta_{ij}$ are arranged in a distance matrix (step S4)

$$\Delta = \left[ \delta_{ij} \right] i = 1 \ldots A, j = 1 \ldots B$$

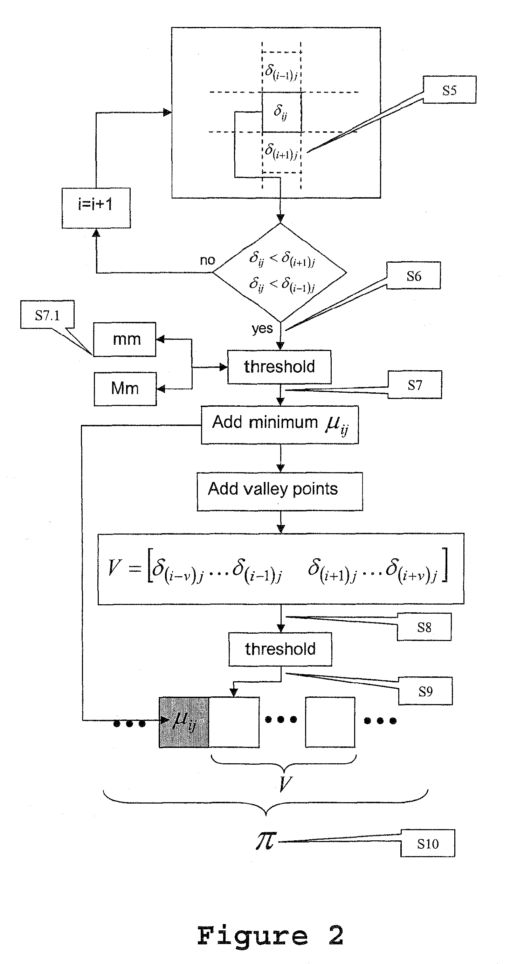

In the preferred embodiment of the invention (Figure 2), for each column of $\Delta$ (step S5), local minima $\mu$ are searched for (step S6). Minima are defined as zero-crossings in the first derivative of the column under exam, yielding positive second derivative. A general approach interpolates the column with a smooth differentiable curve (e.g. a high-order polynomial) that is subsequently analytically differentiated twice in order to calculate first and second derivatives. More practical approaches calculate first derivatives as combinations of smoothing and finite differences. In one embodiment, in order to minimize computational costs, an implicit combination of first and second order finite difference is implemented where minima are found when the previous and next values (column-wise) are higher (step S6)

$$\delta_{ij} = minimum \Leftrightarrow \begin{cases} \delta_{ij} < \delta_{(i+1)j} \\ \delta_{ij} < \delta_{(i-1)j} \end{cases}$$

A local minimum $\mu_{ij}$ at the *i*-th row of the *j*-th column of $\Delta$ indicates that the frame $\mathbf{F}_i^{(a)}$ is the most similar to $\mathbf{F}_j^{(b)}$ within its column-wise neighbourhood $\aleph$. In the simple minimum finding procedure described above, the neighbourhood is defined as $\aleph = \left\{ \mathbf{F}_{j-1}^{(a)}, \mathbf{F}_j^{(a)}, \mathbf{F}_{j+1}^{(a)} \right\}$. Consequently a local minimum $\mu_{ij}$ which is also global in the *j*-th column indicates that the frame $\mathbf{F}_i^{(a)}$ is the best match to $\mathbf{F}_j^{(b)}$. Local minima are evaluated against a threshold (step S7). The algorithm preserves only those minima whose value is sufficiently small i.e. that imply a sufficiently strong match between the corresponding frames in $S_a$ and $S_b$.

The threshold in S7 is adaptively calculated so that a minimum amount mm and no more than a maximum amount Mm of minima are kept. However, if the number of minima found at step S6 is smaller than mm, then the threshold is consequently adapted in order to preserve all of them.

For each local minimum $\mu$ a set *V* of valley points is found (step S8). These are defined as the non-minima points immediately below and above (column-wise in $\Delta$) the corresponding minimum, i.e.

$$\forall\, \mu_{ij} = \delta_{ij} \Rightarrow V = \begin{bmatrix} \delta_{(i-v)j} \dots \delta_{(i-1)j} & \delta_{(i+1)j} \dots \delta_{(i+v)j} \end{bmatrix}$$

where *v* is a default parameter (such as 3) or alternatively is defined heuristically. The goal of *V* is to provide continuity information in the neighbourhood of each $\mu$ and therefore harness discontinuity and non-colinearity that arises from any form of sampling, non-linear editing, and in general lack of □strong□ matching between the two sequences $S_a$ and $S_b$.

Valley points are evaluated against a threshold (step S9). The algorithm preserves only those valley points whose value is sufficiently small i.e. that imply a sufficiently strong match between the corresponding frames in $S_a$ and $S_b$.

Local minima and valley points are denominated altogether as candidate matching segment points $\pi$ (step S10). An example of $\pi$ is illustrated in Figure 3, where local minima are indicated with circles and valley points as crosses.

It should be noted that in a different embodiment of the invention, local minima and valley points may be searched in an analogous fashion along rows of the distance matrix instead of columns. In yet another embodiment of the invention, local minima and valley points may be searched in an analogous fashion in both dimensions of the distance matrix.

A line segment searching algorithm is applied to the set of $\pi$ (step S11). The rationale is that if a video segment of $S_a$ is repeated in $S_b$, this will raise a set of consecutive (adjacent) $\pi$ in $\Delta$ arranged in a line segment $\sigma$ orientated at $\theta = \tan^{-1}(\rho_a/\rho_b)$ where $\rho_a$ and $\rho_b$ are respectively the frame rates of $S_a$ and $S_b$. If frame rate does not change from $S_a$ to $S_b$ it follows that $\rho_a = \rho_b$ and $\theta = 45°$.

Valley points V therefore help to fill any gap that may arise due to the presence of noise or imperfect matching due to any coarse time sampling. An example of the line segment searching algorithm is illustrated in Figure 4.

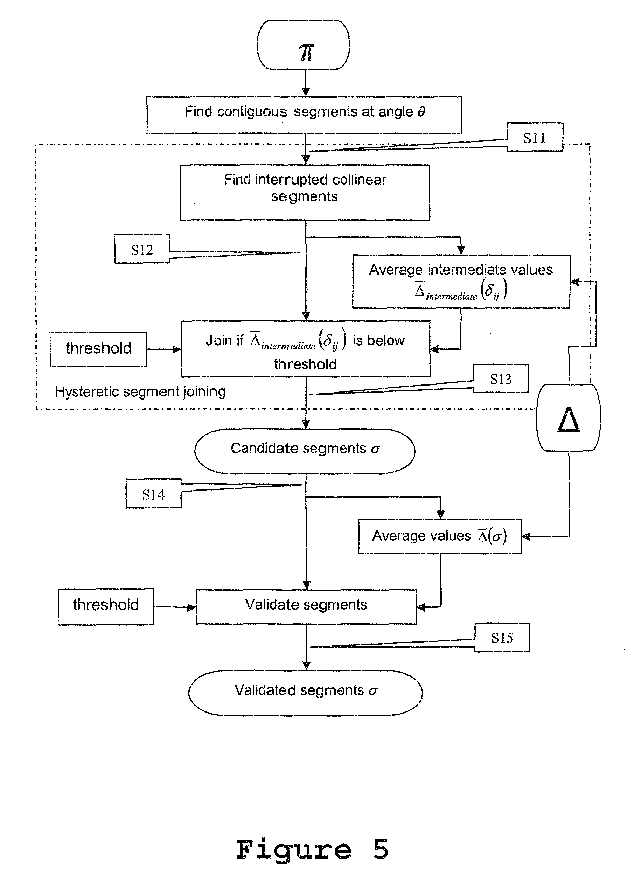

In a preferred embodiment of the invention, further to the line segment searching, a hysteretic line segment joining algorithm follows (Figure 5). This helps to further fill the gaps between line segments that may arise from local non-linear editing, noise, sampling or incorrect matching. If two collinear line segments are closer than a given distance in terms of number of points in $\Delta$ between the proximal ends of the two line segments (step S12), the corresponding intermediate $\delta$ values are averaged. If this average value

$$\overline{\Delta}_{interm}(\delta_{ij}) = \frac{1}{L(\delta_{ij} | i, j \in interm)} \sum_{i,j \in interm} \delta_{ij}$$

is lower than a given threshold, therefore indicating sufficient matching between the intermediate frames in $S_a$ and $S_b$,

then the two line segments are connected (step S13).

In a preferred embodiment, line segments σ (step S14), and therefore matching video segments, are validated according to their average value in Δ calculated as

$$\overline{\Delta}(\sigma) = \frac{1}{L(\sigma)} \sum_{i,j} \delta_{ij} \left| \delta_{ij} \in \sigma \right.$$

where $L(\sigma)$ is the length (number of π) of the line segment σ (step S15). Line segments yielding $\overline{\Delta}(\sigma)$ higher than a given threshold are discarded as erroneous matches, since a high $\overline{\Delta}(\sigma)$ betrays insufficient matching of the frames (Figure 5).

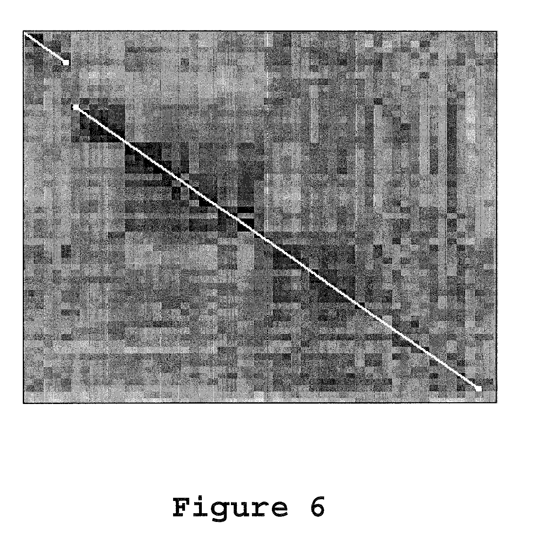

In a preferred embodiment, an ambiguity resolution procedure (AR) is employed to remove multiple matches and ambiguous results. An example of the final result is provided in Figure 6.

The AR works in two stages as follows:

Stage 1: shadow removal

1. Line segments are sorted accorded to their length. Longer line segments are considered first. Each line segment σ projects a □square shadow□ $\zeta(\sigma)$ i.e. defines a square area whose diagonal is σ. If σ is defined by its start and end coordinates $x_{xtart}(\sigma)$, $x_{xtop}(\sigma)$, $y_{xtart}(\sigma)$, $y_{xtop}(\sigma)$ then a point $\pi=(x_\pi,y_\pi)$ is shadowed by σ if

$$\pi \in \zeta(\sigma) \Leftrightarrow \begin{cases} x_\pi \in \left[ x_{xtart}(\sigma)\, x_{xtop}(\sigma) \right] \\ y_\pi \in \left[ y_{xtart}(\sigma),\, y_{xtop}(\sigma) \right] \end{cases}$$

Therefore, a line segment $\sigma_a$ is shadowed by $\sigma_b$ if

$$\sigma_a \in \zeta(\sigma_b) \Leftrightarrow \begin{cases} x_\pi \in \left[ x_{xtart}(\sigma_b), x_{xtop}(\sigma_b) \right] \\ y_\pi \in \left[ y_{xtart}(\sigma_b),\, y_{xtop}(\sigma_b) \right] \end{cases}, \forall \pi(x_\pi, y_\pi) \in \sigma_a$$

It trivially follows that

$$\sigma_a \in \zeta(\sigma_b) \Rightarrow L(\sigma_b) \geq L(\sigma_a)$$

Partial shadowing between two line segments implies that only a subset of points from one line segment is shadowed by the other line segment, and vice versa. In this case, no assumptions on the relative lengths can be drawn.

2. A line segment $\sigma_{shorter}$ shadowed by a longer line segment $\sigma_{longer}$ is removed. However if $\sigma_{shorter}$ is only partially shadowed by $\sigma_{longer}$, only the points $\pi_{shorter}=\pi \in \sigma_{shorter}:\pi_{shorter} \in \zeta(\sigma_{longer})$ are removed. However, if the length of $\sigma_{shorter}$ (or alternatively the length of its shadowed part) is equal or larger than half the length of $\sigma_{longer}$ i.e. $L(\sigma_{shorter}) \geq L(\sigma_{longer})/2$ and the average value of $\sigma_{shorter}$ (or alternatively the average value of its shadowed part) is lower than the average value of $\sigma_{longer}$ i.e. $\overline{\Delta}(\sigma_{shorter}) < \overline{\Delta}(\sigma_{longer})$, hence $\sigma_{shorter}$ inferring a better average match for the respective video sequences, then those points of $\sigma_{longer}$ that are shadowed by $\sigma_{shorter}$ i.e. those points $\pi_{longer}=\pi \in \sigma_{longer}:\pi_{longer} \in \zeta(\sigma_{shorter})$ are removed and the procedure is repeated.

Stage 2: multiple matches

In one embodiment of the invention, it is considered the case where two or more video segments in $S_a$ (in $S_b$) have the same match in $S_b$ (in $S_a$). The corresponding line segments in $\Delta$ are said to be competing as they $\square$compete$\square$ to associate the same frames in $S_b$ (in $S_a$) with different frames in $S_a$ (in $S_b$). Trivially, competing line segments do not shadow each other (this eventuality would be dealt by stage 2). Given two line segments $\sigma_1$, $\sigma_2$, $\sigma_1$ is said to compete with $\sigma_2$ if

- Competing for the same segment in $S_a$:

$$\left[x_{xtart}(\sigma_1), x_{xtop}(\sigma_1)\right] \cap \left[x_{xtart}(\sigma_2), x_{xtop}(\sigma_2)\right] \neq 0$$
$$\left[y_{xtart}(\sigma_1), y_{xtop}(\sigma_1)\right] \cap \left[y_{xtart}(\sigma_2), y_{xtop}(\sigma_2)\right] = 0$$

- Competing for the same segment in $S_b$:

$$\left[x_{xtart}(\sigma_1), x_{xtop}(\sigma_1)\right] \cap \left[x_{xtart}(\sigma_2), x_{xtop}(\sigma_2)\right] = 0$$
$$\left[y_{xtart}(\sigma_1), y_{xtop}(\sigma_1)\right] \cap \left[y_{xtart}(\sigma_2), y_{xtop}(\sigma_2)\right] \neq 0$$

Although competing frame segments may occur, the presence of competing line segments may in fact betray a false result by the algorithm, and therefore they are assessed as follows:

1. Consider the average value $\overline{\Delta}(\sigma)$ of all the competing line segments $\sigma$. The one yielding the lowest $\overline{\Delta}(\sigma)$ is initially considered as the true (winner) match $\sigma_{winner}$.

2. If any other competing segment $\sigma$ yields $\overline{\Delta}(\sigma)$ within an upper bound from the winner average $\overline{\Delta}(\sigma_{winner})$, $\overline{\Delta}(\sigma_{winner}) < \overline{\Delta}(\sigma) < \overline{\Delta}(\sigma_{winner}) + \kappa$ with $\kappa > 0$ a suitable threshold then $\sigma$ is considered another instance of $\sigma_{winner}$. Should that not be the case, $\sigma$ is considered a false detection and discarded.

In different embodiments of the invention, and according to the target application, either Stage 1 or Stage 2 or the entire AR procedure may be omitted.

In one embodiment of the invention, the two video sequences $S_a$ and $S_b$ are one and the same, i.e. $S_a = S_b = S$, and the method is aimed at finding repeated video segments within $S$. In that case only the upper-triangular part of $\Delta$ requires processing, since $S_b = S_a$ trivially implies that $\Delta$ is symmetric, and the main diagonal is a locus of global minima (self-similarity). So we have to guarantee that given a line segment $\sigma = \{x_{atart}, x_{stop}, y_{start}, y_{stop}\}$ then $x_{xtart} < y_{xtart}$, $x_{xtop} < y_{xtop}$. Furthermore, to avoid detection of self-similarity we have to ensure that any detected line segment infer two non-overlapping time-intervals in $S_a$ and $S_b$. In other words $y_{xtop} < x_{xtart}$ i.e. the repeated video segment in $S_b$ must start after the end of its copy in $S_a$. Since however $y_{xtart} < y_{xtop}$, $x_{xtart} < x_{xtop}$, the condition $y_{xtop} < x_{xtart}$ is sufficient as it also implies that the segment lies in the upper triangular part. In an alternative embodiment of the invention, the lower-triangular part of the distance matrix may be processed instead of the upper-triangular part in an analogous fashion.

In different embodiments of the invention, $S_a$ and $S_b$ may be described by multiple descriptors, e.g. separately for different colour channels and/or for *LP* and *HP* coefficients, resulting in multiple distance matrices $\Delta$. This is understood to better harness the similarity between frames by addressing separately the similarity in colour, luminosity, detail, average colour/luminosity, etc.

In a preferred embodiment, we consider the *YUV* colour space, and we separate *HP* and *LP* coefficients for the *Y*-channel, and retain only the *LP* coefficients of the *U*- and *V*-channels. This results in three distance matrices $\Delta_{Y-HP}$, $\Delta_{Y-LP}$, and $\Delta_{UV-LP}$. In such an embodiment, each distance matrix may be processed individually. For example, the minima and valley points found on the $\Delta_{Y-HP}$ may be further validated according to their value in $\Delta_{Y-LP}$ and $\Delta_{Y-HP}$. In a similar fashion, line segments $\sigma$ may be validated according to their average values in the three matrices, i.e. according to $\overline{\Delta}_{Y-HP}(\sigma)$, $\overline{\Delta}_{Y-LP}(\sigma)$ and $\overline{\Delta}_{UV-LP}(\sigma)$.

In different embodiments of the invention, the descriptor elements are not binarised but quantised to a different number of bits, e.g. 2 or 3 bits, in which case the Hamming distance is replaced by a suitable distance measure, e.g.

L1, which may be efficiently implemented using table lookup operations, in a fashion similar to tht commonly employed for the Hamming distance.

In different embodiments of the invention, one or more of the aforementioned multiple descriptors may be calculated from only a portion, e.g. the central section, of the corresponding frames. This can reduce computational costs and may improve accuracy.

In different embodiments of the invention, the frame descriptors may be calculated from spatially and/or temporally subsampled video, e.g. from low-resolution video frame representations, and employing frame skipping. In one embodiment, $S_a$ and/or $S_b$ are MPEG coded and frame matching is performed based on the DC or subsampled DC representations of I-frames. This means that no video decoding is required, which results in a great increase in computational efficiency.

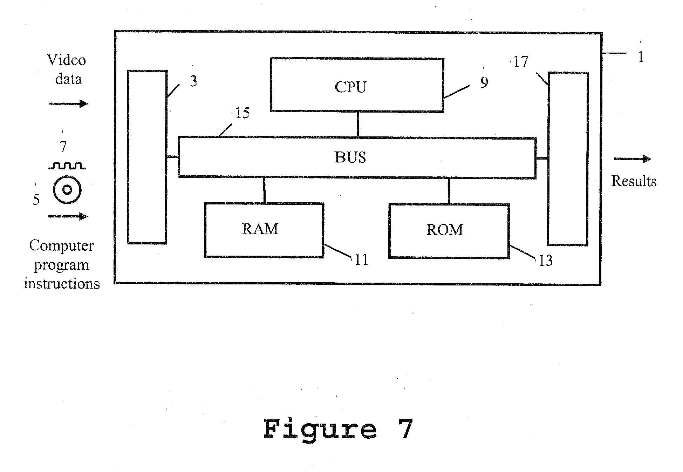

A data processing apparatus 1 for performing the processing operations described above is shown in Fig. 7. The apparatus 1 can, for example, be a personal desktop computer or a portable computer.

The apparatus 1 comprises conventional elements of a data processing apparatus, which are well-known to the skilled person, such that a detailed description is not necessary. In brief, the apparatus 1 of Fig. 7 comprises an input data interface 3 for receiving computer program instructions from a computer program product such as a storage medium 5 or a signal 7, as well as video data to be processed. A processing system is provided, for example, by a CPU 9, a random access memory 11, and a read-only memory 13, which are connected by a bus 15. The CPU 9 controls the overall operation. The RAM 11 is a working memory used by the CPU 9 to execute programs and control the ROM 4, which stores the programs and other data. The processing apparatus of apparatus 1 is configured to perform a method of processing image data defining an image as described herein above. The results of this processing are output by output interface 17.

Although the processing apparatus 1 described above performs processing in accordance with computer program instructions, an alternative processing apparatus can be implemented in any suitable or desirable way, as hardware, software or any suitable combination of hardware and software. It is furthermore noted that the present invention can also be embodied as a computer program that executes one of the above-described methods of processing image data when loaded into and run on a programmable processing apparatus, and as a computer program product, e.g. a data carrier storing such a computer program.

## Claims

1. A method of processing a first sequence of images and a second sequence of images to compare the first and second sequences, the method comprising:

   (a) for each image of the first sequence and each image of the second sequence:

   processing the image data for each of a plurality of pixel neighbourhoods in the image to generate at least one respective descriptor element for each of the pixel neighbourhoods; and
   forming an overall image descriptor from the descriptor elements;

   (b) comparing each image in the first sequence with each image in the second sequence by calculating a distance between the respective overall image descriptors of the images being compared;
   (c) arranging the distances in a matrix; and
   (d) processing the matrix to identify similar images.

2. A method according to Claim 1, wherein each distance comprises a Hamming distance.

3. A method according to Claim 1 or Claim 2, wherein each overall image descriptor is formed from binarised descriptor elements.

4. A method according to any preceding claim, wherein the matrix is processed to identify similar images by:

   processing the matrix to identify local minima in the distances therein;
   comparing each identified local minima against a threshold, the threshold being determined adaptively according to the number of minima identified per row or column of the matrix, and retaining minima which are below the threshold; and
   identifying similar images in accordance with the retained minima.

5. A method according to any of Claims 1 to 3, wherein the matrix is processed to identify similar images by:

> processing the matrix to identify local minima in the distances therein;
> detecting a local valley in the matrix values;
> retaining a subset of the points in the local valley; and
> identifying similar images in accordance with the retained points.

6. A method according to any of Claims 1 to 3, wherein the matrix is processed to identify similar images by:

> processing the matrix to identify local minima in the distances therein;
> applying a line segment searching algorithm to identify local minima lying on a straight line;
> applying a hysteretic line segment joining algorithm to fill gaps between identified line segments; and
> using the results of the processing to identify matching images.

7. Apparatus for processing a first sequence of images and a second sequence of images to compare the first and second sequences, the apparatus comprising:

> image descriptor generating means configured to process each image of the first sequence and each image of the second sequence by:

>> processing the image data for each of a plurality of pixel neighbourhoods in the image to generate at least one respective descriptor element for each of the pixel neighbourhoods; and
>> forming an overall image descriptor from the descriptor elements;

> comparing means configured to compare each image in the first sequence with each image in the second sequence by calculating a distance between the respective overall image descriptors of the images being compared;
> matrix generating means configured to arrange the distances in a matrix; and
> similar image identifying means configured to process the matrix to identify similar images.

8. Apparatus according to Claim 7, wherein the comparing means is configured to calculate a distance between the respective overall image descriptors of the images being compared comprising a Hamming distance.

9. Apparatus according to Claim 7 or Claim 8, wherein the image descriptor generating means is configured to form each overall image descriptor from binarised descriptor elements.

10. Apparatus according to any of claims 7 to 9, wherein the similar image identifying means is configured to process the matrix to identify similar images by:

> processing the matrix to identify local minima in the distances therein;
> comparing each identified local minima against a threshold, the threshold being determined adaptively according to the number of minima identified per row or column of the matrix, and retaining minima which are below the threshold; and
> identifying similar images in accordance with the retained minima.

11. Apparatus according to any of claims 7 to 9, wherein the similar image identifying means is configured to process the matrix to identify similar images by:

> processing the matrix to identify local minima in the distances therein;
> detecting a local valley in the matrix values;
> retaining a subset of the points in the local valley; and
> identifying similar images in accordance with the retained points.

12. Apparatus according to any of claims 7 to 9, wherein the similar image identifying means is configured to process the matrix to identify similar images by:

> processing the matrix to identify local minima in the distances therein;
> applying a line segment searching algorithm to identify local minima lying on a straight line;

applying a hysteretic line segment joining algorithm to fill gaps between identified line segments; and
using the results of the processing to identify matching images.

13. A storage medium storing computer program instructions to program a programmable processing apparatus to become operable to perform a method as set out in at least one of Claims 1 to 6.

14. A signal carrying computer program instructions to program a programmable processing apparatus to become operable to perform a method as set out in at least one of Claims 1 to 6.

Figure 1

Figure 2

LM and VP in $D_{YHP}$

Figure 3

segments

Figure 4

$$\pi$$

Find contiguous segments at angle $\theta$

S11

Find interrupted collinear segments

S12

Average intermediate values $\overline{\Delta}_{intermediate}\left(\delta_{ij}\right)$

threshold → Join if $\overline{\Delta}_{intermediate}\left(\delta_{ij}\right)$ is below threshold

Hysteretic segment joining

S13

$\Delta$

Candidate segments $\sigma$

S14

Average values $\overline{\Delta}(\sigma)$

threshold → Validate segments

S15

Validated segments $\sigma$

# Figure 5

Figure 6

Video
data

→

7

5

Computer
program
instructions

3

15

BUS

CPU        9

17        1

RAM        RAM

→

Results

11        ROM        13

**Figure 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2444094 A
- WO 2007053112 A1
- WO 2004040479 A1
- EP 1640913 A
- EP 1640914 A

**Non-patent literature cited in the description**

- **Samet H.** Foundations of Multidimensional and Metric Data Structures. Morgan Kaufmann, 2006